# EUROPÄISCHE PATENTSCHRIFT

(11) **EP 2 112 731 B1**
(45) Veröffentlichungstag und Bekanntmachung des Hinweises auf die Patenterteilung: **12.07.2017**
(21) Anmeldenummer: 09005582.3
(22) Anmeldetag: 21.04.2009
(51) Int. Cl.: H02G 3/04

(54) **Vorrichtung zur Aufnahme einzelner elektrischer Leitungen**
Device for holding individual electrical cables
Dispositif de réception de conduites électriques individuelles

(30) Priorität: 22.04.2008 DE 102008020220
(43) Veröffentlichungstag der Anmeldung: 28.10.2009
(73) Patentinhaber: Damm, Hans, 76473 Iffezheim (DE)
(72) Erfinder:
(74) Vertreter: Petersen, Frank

(56) Entgegenhaltungen:
- WO-A-2007/117883
- FR-A- 2 853 148
- US-A- 4 939 819

## Beschreibung

Die Erfindung betrifft eine Vorrichtung zur Aufnahme einzelner elektrischer Leitungen in Form einer elektrisch leitenden Ummantelung zum Schutz elektrischer Anlagen gegen elektromagnetische Störungen, insbesondere zum Einsatz in Flugzeugen, wobei die Ummantelung einen Längsschlitz aufweist.

Im Flugzeugbau werden heutzutage eine Vielzahl von Steuerbefehlen nicht mehr wie früher mechanisch oder hydraulisch übertragen sondern über elektrische oder elektronische Steuerleitungen. Gleichzeitig kommen mehr und mehr elektronische Geräte zum Einsatz wie beispielsweise Handys, Laptops mit WLAN etc., die Funkwellen etc. aussenden. Diesen Funkwellen sind die Flugzeuge dabei sowohl am Boden als auch gegebenenfalls in der Luft vermehrt ausgesetzt. Um hier unerwünschte Funktionsstörungen von elektrischen oder elektronischen Betriebsmitteln zu vermeiden, werden daher die innerhalb eines Flugzeuges verlaufenden elektrischen Leitungen mit einer entsprechenden Ummantelung zum Schutz gegen elektromagnetische Störungen versehen.

Jetzt verlaufen häufig mehrere elektrische Leitungen parallel zueinander in einem Kabelbaum.

Aus Gewichts- und Kostenersparnisgründen ist es dabei erwünscht, nicht jede Leitung einzeln abzuschirmen sondern den gesamten Kabelbaum gleichzeitig.

Hierfür kann dann eine wie oben angegebene Vorrichtung, wie sie beispielsweise aus der DE-C-199 14 056 bekannt ist, verwandt werden.

Eine entsprechende Ummantelung wird, nachdem die elektrischen Leitungen zu einem Kabelbaum zusammengefasst wurden, um diesen Kabelbaum herumgelegt. Diese Ummantelung wird abschließend dauerhaft verschlossen, sei es durch Verlötung der den Längsschlitz der Ummantelung begrenzenden Randbereiche (siehe US-A-2,857,453) oder indem die genannten Randbereiche flanschartig ausgebildet sind und durch Verbindungselemente lösbar miteinander verbunden werden (siehe DE-C-39 14 935).

Weiterhin ist im Stand der Technik vorgeschlagen worden, die Ummantelung mittels um sie umlaufender Kabelbinder zu fixieren (siehe DE-C-38 40 880).

Die entsprechend ummantelten Kabelbäume werden dann in einem Flugzeug installiert.

Ummantelungen der beschriebenen Art sind dabei geeignet, Kabelbäume abzuschirmen, die auf Dauer in einem Flugzeug installierte sind. Es ergeben sich aber erhebliche Probleme, wenn die Kabelbäume geändert werden müssen, beispielsweise wenn die Bestuhlung einer Kabine geändert wird. Bei einer derartigen Änderung der Bestuhlung müssen die jeweils neu eingesetzten Sitze nämlich leitungsmäßig zusätzlich angeschlossen werden, um an den Sitzen vorhandene Verbraucher oder Anschlüsse (Bildschirme, Kopfhöreranschlüsse etc.) mit der Bord-Verkabelung zu verbinden.

Sollten also bei einem Kabinenumbau jetzt zusätzliche Sitzreihen eingebaut werden, müssen für diese auch zusätzliche elektrische Leitungen vorgesehen werden. Diese können entweder bereits bei der Erstausrüstung eines Flugzeuges vorgesehen werden, was den Nachteil hat, dass diese Leitungen bei ihrem Nichtgebrauch als unnötiger Ballast anzusehen sind, oder aber sie werden nachträglich verlegt. Dann ist es bei den oben beschriebenen Ummantelungen sehr schwierig, die zusätzlichen Leitungen mit in den Kabelbaum zu integrieren: Man hat also entweder die Wahl, die zusätzlichen Leitungen separat zu ummanteln - was ein unerwünschter Gewichtsnachteil ist - oder aber man muss die Ummantelung des vorhandenen Kabelbaumes mühsam öffnen, um das zusätzliche Kabel ebenfalls in diese Ummantelung einzubringen. Gemäß der FR 2853148 wird vorgeschlagen eine Ummantelung der oben Gemäß der FR - 2853 148A wird vorgeschlagen, beschriebenen Art derart weiterzubilden, dass die Einbringung einer weiteren elektrischen Leitung in einen Kabelbaum ohne größeren Montageaufwand möglich ist. Dies wird dadurch gelöst, dass in die Ummantelung Fäden aus Polyphenylsulfid (PPS) eingearbeitet sind, die im Wesentlichen in Umfangsrichtung der vorgesehenen Ummantelung ausgerichtet sind und einer Wärmebehandlung unterzogen wurden.

Es hat sich herausgestellt, dass derartig wärmebehandelte PPS-Fäden eine zurückfedernde Eigenschaft haben. Die Ummantelung ist damit im Bereich ihres Längsschlitzes quasi selbstschließend. Man kann somit an dem Schlitz eine elektrische Leitung in das Innere der Ummantelung einführen und/oder aus diesem herausnehmen. Der Schlitz verschließt sich danach jeweils wieder selbst aufgrund der zurückfedernden Eigenschaften der PPS-Fäden.

Damit ist es nicht mehr notwendig, separate Elemente oder Handhabungen für das Verschließen der Ummantelung vorzusehen. Es müssen bei der Einbringung oder Entfernung einer elektrischen Leitung also nicht mehr separat Lötnähte geöffnet oder Kabelbinder etc. entfernt werden. Vielmehr kann ein zusätzliches Kabel unmittelbar aus dem Inneren einer Ummantelung herausgenommen oder in das Innere der Ummantelung eingeführt werden, was zeit- und damit kostensparend ist. Aufgrund der Eigenschaften des wärmebehandelten PPS federt die Ummantelung nach dem Einfügen oder Entnehmen einer Leitung wieder selbständig in ihre geschlossene Position zurück.

Um ein besonders sicheres Schließen zu erreichen, überlappen sich die Kanten der Ummantelung entlang des Längsschlitzes. Wenn zusätzliche Leitungen innerhalb der Ummantelung untergebracht werden, verringert sich der Betrag der Überlappung, da sich der Umfang der Ummantelung entsprechend vergrößert. Wird eine Leitung aus dieser Ummantelung herausgenommen, vergrößert sich der Betrag der Überlappung entsprechend, da sich der Umfang der Ummantelung verringert. Damit ist auch jederzeit ein enges Anliegen der Ummantelung an den in ihr befindlichen Kabelbaum gewährleistet und dieser wird so auch in seiner Position fixiert und gehalten.

Vorzugsweise sind die in der Ummantelung vorhandenen PPS-Fäden Monofiles. Hierdurch ist eine stärkere Federwirkung in Umfangsrichtung zu erzielen. Es wird z.B. in der WO 2007/177883 beschirieben die Ummantelung aus einem Gewebe herzustellen aus Kupferfaden und PPS. Einerseits wird durch das eingewebte Kupfer eine besonders gute Abschirmleistung erreicht. Andererseits kann das PPS außer der Form- und Federfunktion für die Ummantelung auch eine Haltefunktion für das die Abschirmung bewirkende Kupfer übernehmen. Ein solches Gewebe bringt aber erhebliche Fertigungsprobleme mit sich.Erfindungsgemäss wird statt dessen vorgeschlagen das Gewebe mit Fäden, insbesondere Kettfäden, aus elektrisch leitenden Kunststofffasern herzustellen. lung auch eine Haltefunktion für das die Abschirmung bewirkende Kupfer überDies hat insbesondere auch Gewichtsvorteile.

Allerdings ist zu berücksichtigen, dass insbesondere für den Einsatz in Flugzeugen erhebliche Restriktionen bezüglich der zugelassenen Werkstoffe existieren. So wird besonders bevorzugt, auch für die Fäden Monofiles aus PPS zu verwenden, die metallisiert sind. Für derartige Metallisierungen, unter denen metallische Beschichtungen verstanden werden, werden Metalle verwendet, wie Kupfer, Zinn, Nickel, Gold, Silber verwenden, die metallisiert sind. Für derartige Metallisierungen, unter denen oder Kombinationen hier von. Die metallischen Beschichtungen können dabei entweder im CVD- oder im PVD-Verfahren aufgebracht werden. Die Ummantelung wird insbesondere als Gurt gewebt, der danach in eine Schlauchform gebracht wird, indem die Seitenkanten des Gurtes übereinandergebracht werden. Der derartig geformte Schlauch, der einen Längsschlitz aufweist, wird dann auf eine Temperatur von ca. 200 °C erhitzt, womit die aus PPS bestehenden Fäden, insbesondere Schussfäden des Gurtes dauerhaft ihre im Wesentlichen C-förmige Form einnehmen, die sie nach dem Abkühlen auch beibehalten. In diese Form federn sie auch jeweils zurück, nachdem durch dem Längsschlitz, der sich zwischen den aneinander angrenzenden Seitenkanten des Gurtes bildet, ein Kabel ein- oder ausgeführt wird.

Weitere Vorteile und Merkmale der Erfindung ergeben sich aus der nachfolgenden Beschreibung eines Ausführungsbeispiels. Dabei zeigt:

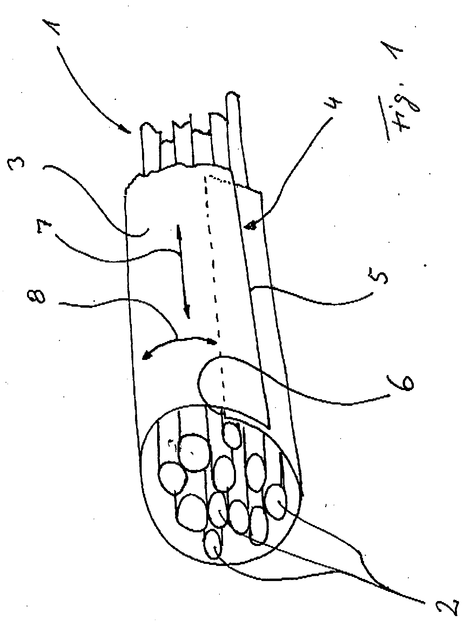

Figur 1 mehrere elektrische Leitungen in einer erfindungsgemäßen Ummantelung

In Figur 1 erkennt man einen Kabelbaum 1, in dem eine Vielzahl von Leitungen 2 zusammengefasst sind. Um diesen Kabelbaum ist eine - hier lediglich abschnittweise dargestellte - Ummantelung 3 gelegt, die einen Längsschlitz 4 aufweist. An diesem Längsschlitz überlappen die Kanten 5, 6 der Ummantelung 3.

Die Ummantelung besteht aus einem Gewebe, bei dem parallel zu den Kanten 5, 6 (entsprechend dem Doppelpfeil 7) Kettfäden aus metallisiertem Kunststoff verlaufen, die mit Schussfäden verwebt sind, die dabei insbesondere in Umfangsrichtung (entsprechend dem Doppelpfeil 8) verlaufen. Dieses Gewebe wird flächig hergestellt und danach in seine in der Figur 1 dargestellte Form gebracht.

In dieser einem Schlauch ähnelnden Form wird der Gurt dann einer Wärmebehandlung unterzogen, womit die Schussfäden, die vorzugsweise aus PPS bestehen, dauerhaft diese Form annehmen. Nach der Wärmebehandlung erhält man somit ein schlauchförmiges Gewebe mit dem Längsschlitz 4. Die Schussfäden aus PPS sind dabei insbesondere Monofiles, da sich mit diesen eine auch auf Dauer besonders gut federnde Eigenschaft des Schlauches erreichen lässt.

Durch den genannten Längsschlitz hindurch können Kabel in das Innere der Ummantelung 3 eingebracht werden oder aber bei Bedarf auch aus dem Inneren herausgenommen werden. Es ist auch möglich, eine Leitung bis zu einer bestimmten Stelle innerhalb der Ummantelung 3 zu führen und dann an dem Schlitz 4 aus der Ummantelung herauszuführen.

Die Monofiles insbesondere der Kettfäden, oder auch zusätzlich der Schussfäden, sind metallisiert, d. h. chemisch oder physikalisch mit einer dünnen Schicht Metall überzogen Aufgrund der elektrisch leitfähigen Eigenschaften dieser Fäden bildet die Ummantelung 3 eine elektrische Abschirmung für die in das Innere eingeführten Leitungen 2, die den Kabelbaum 1 bilden.

Hierzu ist die Ummantelung 3 an einer passenden Stelle (in hier nicht dargestellter Weise) mit Masse verbunden. Hierzu können z. B. einzelne Kettfäden des Gewebes aus der Ummantelung herausgeführt und in dem Fachmann bekannter Weise miteinander verbunden und dann an Masse angeschlossen werden.

## Patentansprüche

1. Vorrichtung zur Aufnahme einzelner elektrischer Leitungen (2) in Form einer elektrisch leitenden Ummantelung (3) zum Schutz gegen elektromagnetische Störungen, wobei die Ummantelung einen Längsschlitz (4) aufweist und aus einem Gewebe besteht, wobei in die Ummantelung im Wesentlichen in Umfangsrichtung (8) ausgerichtete PPS-Fäden eingearbeitet sind, die wärmebehandelt sind,
**dadurch gekennzeichnet,**
**dass** die PPS-Fäden elektrisch leitend, nämlich metallisch beschichtet sind, wobei das Material der Beschichtung ausgewählt Ist aus einer Gruppe, die Kupfer, Zinn, Nickel, Gold, Silber oder eine Kombination dieser Stoffe enthält

2. Vorrichtung gemäß Anspruch 1,
**dadurch gekennzeichnet,**
**dass** die Kanten (5, 6) der Ummantelung (8) entlang des Längsschlitzes (4) überlappend sind.

3. Vorrichtung gemäß Anspruch 1,
**dadurch gekennzeichnet,**
**dass** die PPS-Fäden Monofiles sind,

4. Vorrichtung gemäß Anspruch 1,
**dadurch gekennzeichnet,**
**dass** die Ummantelung (3) als Gurt gewebt wird und anschließend verformt und erhitzt wird.

## Claims

1. Apparatus for accommodating individual electric cables (2) in the form of an electrically conductive sheath (3) for protecting against electromagnetic interference, wherein the sheath has a longitudinal slit (4) and consists of a woven material, wherein PPS fibres, aligned substantially in the peripheral direction and have been heat treated, are incorporated into the sheath, **characterised in that** the PPS fibres are electrically conductive, namely are coated with metal, wherein the material of the coating is selected from a group, which includes copper, tin, nickel, gold, silver or a combination of these materials.

2. Apparatus as claimed in Claim 1, **characterised in that** the edges (5, 6) of the sheath (8) are overlapping along the longitudinal slit (4).

3. Apparatus as claimed in Claim 1, **characterised in that** the PPS fibres are monofilaments.

4. Apparatus as claimed in Claim 1, **characterised in that** the sheath (3) is woven as a strap and is subsequently shaped and heated.

## Revendications

1. Dispositif de réception de lignes électriques individuelles (2) sous la forme d'une enveloppe (3) électriquement conductrice pour la protection contre les perturbations électromagnétiques, l'enveloppe présentant une fente longitudinale (4) et étant constituée d'un tissu, des fils en PPS orientés sensiblement en direction circonférentielle (8), qui sont traités thermiquement, étant incorporés dans l'enveloppe,
**caractérisé en ce**
**que** les fils en PPS présentent un revêtement électriquement conducteur, notamment métallique, le matériau du revêtement étant sélectionné dans un groupe qui contient le cuivre, l'étain, le nickel, l'or, l'argent ou une combinaison de ces matières.

2. Dispositif selon la revendication 1,
**caractérisé en ce**
**que** les bords (5, 6) de l'enveloppe (8) se chevauchent le long de la fente longitudinale (4).

3. Dispositif selon la revendication 1,
**caractérisé en ce**
**que** les fils en PPS sont des monofils.

4. Dispositif selon la revendication 1,
**caractérisé en ce**
**que** l'enveloppe (3) est tissée sous forme de sangle et ensuite déformée et chauffée.
